# EUROPEAN PATENT SPECIFICATION

(11) **EP 0 305 019 B1**
(45) Date of publication and mention of the grant of the patent: **03.11.1993**
(21) Application number: 88201828.6
(22) Date of filing: 26.08.1988
(51) Int. Cl.: B01D 53/36, B01J 21/18

(54) **Process for the destruction of chemical waste materials, in particular of organic halogen compounds, by hydrogenolysis**
Verfahren zur Vernichtung von chemischen Abfällen, insbesondere organischen Halogenkomponenten, durch Hydrogenolyse
Procédé pour la destruction de déchets chimiques en particulier des composants halogénés organiques, par hydrogénolyse

(30) Priority: 26.08.1987 NL 8701998
(43) Date of publication of application: 01.03.1989
(73) Proprietor: Rijksuniversiteit Leiden, Leiden (NL)
(72) Inventor: Louw, Robert, NL-2396 CP Koudekerk Aan Den Rijn (NL)
(74) Representative: Kooy, Leendert Willem

(56) References cited:
- EP-A- 0 178 001
- WO-A-86/03690
- DE-A- 3 601 917

## Description

The invention concerns a process for the destruction of waste-materials, in particular organic-chemical industrial waste materials having considerable contents of chlorine and other halogens, by hydrogenolysis.

Many municipal and in particular industrial waste materials comprise or consist of organic halogen compounds and in particular of biologically and technically difficult to degrade chlorine compounds which sometimes even impose a health hazard, because they are toxic. Examples of these kinds of waste are polyvinylchloride waste materials which are offered in large quantities, and since they are not biologically degradable, cause problems; pesticides, like aldrin, dieldrin,chlordane, hexachlorocyclohexane and polychlorinated biphenyls (PCBs) used as transformer oil and which compounds are toxic, and residues of the preparation of pesticides and polychlorinated biphenyls, which contain besides traces of said pesticides and polychlorinated biphenyls also toxic oxygen containing derivatives (e.g.dioxins).

Nowadays the major part of the chlorine-containing waste materials are usually destructed by combustion, recently this is done in special furnaces to lower the forming of extremely toxic polychlorodibenzodioxins as much as possible. Complete destruction appears to be difficult to realize and anyhow it is quite expensive.

A proposal to decompose such difficult to destruct material by hydrogenolysis is disclosed in EP-A-175406. By thermal reaction with/in hydrogen or hydrogen-containing gas between 700-1200°C said chemical waste materials could be effectively converted into hydrocarbons and hydrogen derivatives of halogen, nitrogen, sulphur, etc. As a rule this process can be carried out in such a manner that with sufficiently high conversion only a small quantity of soot is formed. However, there appear to be also substrates, such as hexachlorobutadiene which cause relatively high soot formation.

Another proposal for the decomposition of such difficult to destruct waste materials by hydrogenolysis is disclosed in EP-A-178001 providing the suggestion to use as a catalyst inert oxides like SiO₂ and Al₂O₃ and mixtures thereof, impregnated with an activating metal oxide or metal salt, such as nickel oxide or magnesium sulfate. Rather low temperatures, to wit 250° up to 400°C can then be used.

However, this process has the serious disadvantage that the catalyst is highly sensitive for poisoning, so that it cannot be used for conventional waste materials, originating from households and industries. In addition said catalytic process at a relatively low temperature appears to be too selective i.e. certain classes of compounds are not attacked at all. Moreover, the stream of waste materials to be treated is to be "conditioned" before subjecting it to the reaction.

It has now been found that these disadvantages can be overcome and a profitably applicable process for treating such difficult to degrade waste materials is realized which process is applicable to any kind of organic halogen compounds and in particular chlorine compounds and to waste materials comprising such compounds, when the waste materials together with a stream of hydrogen are led through a bed of carbon particles at a temperature between 400° and 650°C. Not only the halogen -(in particular chlorine)- compounds are degraded, but also nitrogen- and sulphur compounds which are frequently present, e.g. in waste materials of biological origin, and plastic resin scrap and waste materials of dyes, are degraded by hydrogenolysis under these circumstances.

It is noted that from WO-A-8603690 the use of activated carbon as a dehydrochlorination catalyst is known per se. Said publication discloses a process wherein a gas of chlorinated hydrocarbon is passed over activated carbon which is impregnated with metal salts at a temperature between 200° and 600°C.

The carbon particles which are used in the bed according to the invention have suitably a minor size of 0.2-5 mm.

If the carbon particles are granular, these grains have a diameter of from 0.2-5 mm and preferably of from 0.5-2 mm.

Carbon particles in the form of pellets or bars have a diameter of from 0.2-5 mm and preferably of from 0.5-3 mm, the size in length usually being 2-5 mm or even more.

Preferably the bed of carbon particles at least partially consists of activated coal.

Activated carbon is a well-known product and it is used on a large scale for the removal of various materials from product streams (vide e.g. Kirk-Othmer's Encyclopedia of Chemical Technology, Vol. 4 (3rd edition, John Wiley & Sons, 1978) pages 561-569). In Wissenschaft & Technik 39 nr. 12 (Dec. 1986) H. Jüntgen stated the catalytic activity of activated carbon on the oxidation of SO₂ to SO₃ and the reduction of NO to NH₃. It was also stated that activated carbon catalyses various other reactions, inter alia the splitting off of HCl from 1,1,2,2-tetrachloroethane to form trichloroethylene.

However, it has now been established that activated carbon catalyses a complete hydrodechlorination of aliphatic chlorohydrocarbons such as CCl₄, CHCl₃, CH₂Cl₂,C₂Cl₄,1.2-dichloropropane and hexachlorobutadiene at temperatures of 300°-750°C, said reaction can proceed for hours. Monochlorobenzene, dichlorobenzene, hexachlorobenzene, dichlorophenol and the like are somewhat more difficult to dechlorinate and tend to inactivate the carbon in a rather short period of time, but nevertheless they are converted as yet into benzene and HCl. These conversions may reach a completeness of indeed 99.999%, if only the right conditions are provided.

To benefit from this effect a bed is suitably used comprising at least 10% by weight and preferably at least 45% by weight of activated carbon.

Many qualities of activated carbon can be used; it has been established that the commercial products NORIT RB3 and ROX3 and CHEMVIRON (activated) carbon for water purification are quite suitable.

Other forms of carbon are also suitable. Coke also provides a catalytic effect which manifests itself in an accelerated reaction, be it that this catalytic effect occurs for a very brief period. Attractive results have actually also been achieved with carbon produced in the so-called 'Flexicoking' process of Exxon.

Moreover, it has been established that the catalytic activity of a carbon species can be enhanced by a certain pretreatment, such as passing hydrogen/nitrogen over the carbon particles for a few hours or by a slight degree of gasification with steam, at temperatures higher than those needed for hydrodechlorination. The catalytic activity of the carbon can further be enhanced by impregnating the carbon with catalytically active metals, such as chromium, iron and nickel. The catalysts thus obtained are highly suitable for destructing the more difficult materials such as chlorobenzenes. Promising results have been achieved by impregnating with 3% of chromium(III)sulfate, 2% of iron(II)sulfate and with 1.5% of nickel carbonate.

In the hydrogenolysis the temperature must lie between 300° and 750°C, preferably between 400 or 500 and 650°C, especially in case the waste materials to be treated comprise a large amount of aromatic chloro compounds. When controlling the process properly, a temperature of 550°-600°C will suffice.

The carbon may be used in a fixed bed, a moving bed or a fluidized bed; all of the three kinds of beds are suitable for carrying out the present invention.

The amount of hydrogen must at least be sufficient to convert all the present halogen into HF, HCl, HBr and HI, all the present nitrogen into NH₃, all the present sulphur into H₂S and all the present oxygen into water. Of course, an excess of hydrogen can also be applied. such as 3 mole H₂ to each atom nitrogen and/or sulphur or to each atom halogen. The unconverted portion of hydrogen can be re-used after the separation of the reaction products and - if necessary - after an appropriate purification. Taking into account that especially the aliphatic (waste) materials for a major part are converted into carbon, the hydrogen atoms present therein also become available for binding to e.g. chlorine to HCl, and in such cases less than the stoechiometrically required amount of 'externally' added H₂, for example at least about 0.5 mole per equivalent of halogen and optionally nitrogen and/or sulfur radicals, suffices.

It is not necessary to use pure hydrogen; the gas may -indeed- comprise inert components such as N₂, He and the like, but in addition thereto also i.a.CO, H₂O (steam) and hydrocarbons such as methane, ethylene and benzene (which are also formed as products of the reaction). Thus the hydrogen-containing gas may be suitably prepared by conversion of methanol, or by gasification of carbon with steam.

The feeding rate of the waste materials must be such that the contact time of the waste materials with the catalyst is at least 0.1 second. Basically there is no upper limit, even if for practical reasons the contact time will seldom exceed a few minutes. Preferably the contact time lies between 1 second and 1 minute, and 3-10 seconds appeared to be an attractive selection.

The effluent of the hydrogenolysis is cooled, preferably rapidly cooled, to prevent side-reactions. For this water is excellent, especially because with most hydrogenation-reactions water is formed from the oxygen-compounds present in the waste materials. The quenching water will then also absorb the formed hydrogen halide acids, the NH₃ and H₂S. However, toluene and heptane may also be used for quenching; these quenching agents will indeed properly absorb benzene formed in the hydrogenolysis of chlorobenzenes and PCBs. In case water is used and much benzene and the like is produced by the hydrogenolysis, said benzene will form a separate phase, which is processed separately.

The carbon material, whether this is either activated carbon or coke or anything else and whether it is impregnated with an activating metal or not, gradually loses its activity and must be replaced by fresh material. This can be done continuously or in batches. However, removal of the catalyzing carbon material does not imply any loss, for it may be used as fuel for heating the reactor and/or the starting materials, and it may also be used as starting materials in the generation of the hydrogen-rich gas. This latter gas may also serve - as established - as a medium for hydrodechlorination.

The following examples provide a better understanding of the invention. The examples are presented for purposes of illustration only and are not intended to limit the scope of the invention.

### Example I

A quartz tube reactor, cross-section 1 cm², was filled with 26.3 g of granular activated carbon (Chemviron; grain size 0.2-2 mm), in such a manner that an effective length of 45 cm was obtained and the free volume was about 20 cm³.

In a stream of nitrogen this bed was heated by means of an electric furnace. At circa 100°C about 15% by weight of water evaded from the carbon. After the temperature was raised to 565°C, the nitrogen was replaced by hydrogen. For a few minutes much water and H₂S were produced. After this formation of water and H₂S had stopped, for two hours a stream of 94 mmole/h (4.75 g/h) of methylchloride was added to the hydrogen (129 mmole/h). The methylchloride was practically completely converted, the chlorine forming quantitatively HCl. The output of CH₃Cl was less than 0.1% of the input; the yield of methane calculated on CH₃Cl was 20 mole % and in addition 0.3 mole % of ethylene and 0.5 mole % of ethane were formed. The rest of the methylchloride was converted into carbon (soot) depositing on the activated carbon.

### Example II

An identical quartz tube reactor as used in Example I was filled with 24.6 g of activated carbon (Chemviron), this bed was heated in a stream of nitrogen in the same way as done in Example I and subsequently in a stream of hydrogen. Thereafter for three hours a stream of 127 mmole/h methylchloride was added to the hydrogen (63 mmole/h). The methylchloride was practically completely dechlorinated, the chlorine forming quantitatively HCl. The yield of methane calculated on methylchloride was 32 mole %; the yield of ethylene was 0.13 mole % and the yield of ethane was 0.68 mole %. For the rest carbon (soot) was obtained that was deposited on the activated carbon.

### Example III

An identical quartz tube reactor as used in Examples I and II was filled with 23.5 g of fresh granular activated carbon (Chemviron). Thereafter under the same conditions as in Example I this bed was heated to 458°C in a stream of nitrogen. Thereafter the bed was purged with hydrogen at this temperature. Subsequently a stream of H₂ (52 mmole/h) and hexachlorobutadiene (6.1 mmole/h) was passed through the bed at this temperature. The residence time was circa 18 seconds. The hexachlorobutadiene was practically completely converted, the chlorine forming quantitatively HCl. The effluent gas stream contained only traces of methane. For the rest the organic C was converted into carbon (soot) deposited on the activated carbon. After 2 h 20 min. the conversion still continued in the same manner.

### Example IV

An identical quartz tube reactor as used in the preceding examples was filled with 16.5 g of a bar-shaped activated carbon (Norit ROX 3, diameter 3 mm, length 2-10 mm). The reactor was heated in a nitrogen stream to 620°C and purged with hydrogen at this temperature. Thereafter 375 mmole/h hydrogen and 31 mmole/h carbontetrachloride was passed through the reactor. For the whole duration of 12 hours, it was established that the carbontetrachloride was practically completely converted, the chlorine forming quantitatively HCl. The effluent stream of gas contained only traces of CCl₄ and traces of lower chlorinated methanes. Further also 2 mmole/h methane and 0.2 mmole/h ethane were formed. The rest of the supplied organic C was converted into carbon (soot). After the experiment was stopped, the weight of the carbon bed had increased with about 3.5 g.

### Example V

An identical quartz tube reactor as used in the preceding examples was filled with 26.9 g of granular activated carbon (Chemviron) and was heated in a stream of nitrogen to a temperature of 620°C. Thereafter the bed was purged with hydrogen at this temperature. Subsequently a stream of hydrogen with chlorobenzene was passed through the reactor (H₂ 160 mmole/h; C₆H₅Cl 60 mmole/h). In the beginning the dechlorination was complete, the yield of benzene being 50%. After 1/2 to 1 h the conversion gradually diminished. Per gramme of carbon circa 1 g of chlorobenzene was converted.

### Example VI

Example V was followed, but instead of chlorobenzene a mixture of chlorobenzene and hexachlorobenzene was used in an amount of chlorobenzene 50.7 mmole/h; hexachlorobenzene 0.2 mmole/h; a stream of hydrogen 160 mmole/h. In the beginning dechlorination of both chlorobenzene and hexachlorobenzene was complete, the chlorine forming quantitatively HCl. After some time the effluent stream of gas, beside chlorobenzene, also contained traces of di- and trichlorobenzene, but breakthrough of higher chlorinated benzenes did not occur, even not after 4 1/2 h.

### Example VII

Examples V and VI were followed, but 23.4 g of granular activated carbon (Chemviron) was applied and a gas mixture consisting of chlorobenzene 53.5 mmole/h; CH₂Cl₂ 15.8 mmole/h; H₂ 214 mmole/h was applied. The residence time was 3.5 s.

For 2 h the chlorobenzene was completely dechlorinated. Thereafter breakthrough of chlorobenzene occurred. During the whole experiment which took 5 h 10 min. CH₂Cl₂ was quantitatively converted. The effluent gas stream comprised 22 mole % CH₄ calculated on CH₂Cl₂; 0.33 mole % C₂H₄ and 1.03 mole % C₂H₆.

For 4 h at the same temperature of 620°C through the same carbon bed subsequently a stream of hydrogen (169 mmole/h) and CH₂Cl₂ (29.5 mmole/h) was passed, the residence time in the reactor being 4.9 s. Also during this whole experiment the CH₂Cl₂ was completely converted, the chlorine forming quantitatively HCl. The output of CH₄ calculated on CH₂Cl₂ was 10 mole %; the output of C₂H₄ was smaller than 0.1 mole % and the output of C₂H₆ was 0.47 mole %.

Through the reactor comprising the carbon bed used for the preceding experiments subsequently a stream of hydrogen (216 mmole/h) and tetrachloroethylene (18.6 mmole/h) was passed for 2 h. The residence time in the reactor was 4.2 s. The tetrachloroethylene was quantitatively converted, the chlorine forming quantitatively HCl. 3.2 mole % of methane, 0.08 mole % of ethylene and 0.59 mole % of ethane, calculated on the used tetrachloroethylene, were formed.

Subsequently through the reactor with the previously used activated carbon a stream of hydrogen (244 mmole/h) and carbon tetrachloride (19.6 mmole/h) was passed for 4 h. The residence time was 3.7 s. The carbon tetrachloride was completely dechlorinated, the chlorine forming quantitatively HCl. 5.1 mole % of CH₄; 0.09 mole % of C₂H₄ and o.84 mole % of C₂H₆, calculated on CCl₄, were formed.

In all these experiments for the rest carbon (soot) was formed and deposited on the activated carbon.

### Example VIII

This example shows the enhancement of the catalytic activity of activated carbon by impregnating the activated carbon with catalytically active metals.

0.86 g Cr (III) sulfate, 0.71 g Fe (II) sulfate and o.50 g Ni (II) carbonate were dissolved in 250 ml of distilled water whereto a few drops of concentrated sulphuric acid were added. In this solution 30 g of activated carbon (Chemviron) was dispersed. Thereafter the water was removed in a vacuum-film evaporator and the product was dried at 150°C.

A quartz tube reactor, cross-section 1 cm², as used in the preceding examples, was filled with a bed of activated carbon from this material. The bed of activated carbon was heated overnight in a stream of nitrogen at 614°C, followed by passing through a mixture of H₂/N₂ (220 mmole/h and 71.8 mmole/h respectively). After 10 minutes 29.5 mmole/h chlorobenzene was added to the stream of H₂/N₂. The average contact time was 5.2 s. For more than 6 h the dechlorination was practically complete; the chlorine forming quantitatively HCl. Beside HCl, the effluent mixture contained benzene in an amount of 47-53% calculated on chlorobenzene, and a trace of chlorobenzene (<0.001% calculated on starting chlorobenzene).

After 7 1/2 h the breakthrough of chlorobenzene was 1.55%, after 8 1/2 h it was 34.8%, and after 10 h 25 min. it was 65.3%.

### Example IX

Activated carbon (Chemviron) was impregnated in the same way as described in Example VIII with chromium, iron and nickel.

A quartz tube reactor, cross-section 1 cm², was filled with 30 g of the impregnated activated carbon. After drying in nitrogen and further heating, first a mixture of 1:4 v/v N₂/H₂ at 760°C was slowly passed overnight. After cooling to 620°C, H₂ 216 mmole/h, N₂ 68 mmole/h were passed through. Thereafter 30 mmole/h of chlorobenzene was added. Such a vigorous dechlorination reaction occurred that the first part of the bed of activated carbon was clogged after about 1 h 15 min.

Repetion of this experiment, now at 473°C, provided a better result, viz. that the behaviour highly looked like that of non-pretreated carbon at 620°C. For 1 1/2 h complete dechlorination was effected. Thereafter the conversion with formation of HCl became gradually less and an increasing breakthrough of unconverted chlorobenzene took place.

### Example X

This example describes the realisation of the process by applying 'Flexicoke'.

A fraction of a particle size of 0.5-2 mm was sieved off from an amount of 'Flexicoke', the carbon product formed in the Exxon Flexicoker in Europoort, the Netherlands.

A tankflow reactor (reactor with back-mixing in the shape of a tube of diameter 3.6 cm and a volume of 60 cm³, and at both ends a conduit with a cross-section of 1 cm²) was filled with 37.1 g of said carbon (remaining volume 30 cm³). After the bed had been heated to 1040°C while passing 67 mmole/h of nitrogen, subsequently for 3 h 45 min. also 167 mmole per hour of water vapour was added. After the pretreatment the temperature was adjusted at 615°C and a stream of hydrogen (237 mmole/h) was used, whereto chlorobenzene (58.9 mmole/h) was added. For half an hour the dechlorination degree was more than 80%; thereafter the dechlorination degree gradually diminished.

Without pretreatment with steam, the activity of this carbon was much less, only for a few minutes the HCl-production was considerable. After 15 minutes, however, this was reduced to about 15%.

### Example XI

This example illustrates the hydrodechlorination by means of Flexicoke activated by applying metal salts.

0.91 g Cr (III) sulfate, 0.70 g Fe (II) sulfate and 0.54 g Ni (II) carbonate were dissolved in 250 ml of demineralized water, to which a few drops of concentrated sulphuric acid were added. In this solution 46 g of a Flexicoke-fraction with a particle size of 0.5-2mm was dispersed. The water was evaporated in vacuum and the product was dried at 150°C.

37.5 g of said material was used in the tankflow-reactor as used in Example X and heated in nitrogen to 620°C. Thereafter hydrogen (230 mmole/h) was used. After purging with hydrogen, chlorobenzene (30 mmole/h) was added to the hydrogen stream. After feeding of chlorobenzene was started the HCl-production was practically quantitative for more than 15 minutes. Thereafter the conversion was gradually diminished. 3 h later the HCl-level was still more than 15% (that is to say at least 10 times as high as would have been the case without using the carbon bed).

Similar results were obtained by applying crushed coke available for domestic use, said coke was first pulverized and a fraction thereof with a particle size of 0.5-2mm was seaved off, and activation and application occurred in the above described manner.

### Example XII

This example illustrates the use of a mixture of carbon species.

A reactor filling was composed of 90 parts by weight of Exxon 'Flexicoke' (fraction with a particle size of 0.5-2 mm) and 10 parts by weight of activated carbon (Chemviron. The quartz tube reactor, cross-section 1 cm², as used in Examples I-IX, was filled with a bed of 25 g of this carbon mixture, said bed having an effective length of 45 cm and the rear of said bed was filled with another 3 g of activated carbon (Chemviron) (length of this bed 5.5 cm).

After heating this bed in a stream of nitrogen to 620°C and purging the bed with hydrogen at this temperature H₂ (226 mmole/h), chlorobenzene (48.8 mmole/h), o-dichlorobenzene (4.7 mmole/h), CCl₄ (4.5 mmole/h) was passed through the reactor for 6 h 40 min. During the whole experiment the conversion of CCl₄ was 100%; in the beginning the conversion of the chloro-aromates was also 100%, but after some time this decreased.

### Example XIII

This example illustrates the simultaneous hydrogenolysis and gasification with steam.

A quartz tube reactor, total length 85 cm, internal diameter 1.8 cm (cross-section 2.5 cm²) was vertically arranged and provided with an inlet for gases (+ steam) and an outlet for carbon particles at the bottom and an inlet for (vapours of) waste materials in the middle and an outlet for product gases and an inlet for carbon particles at the top. By means of two electrical furnaces zones of 25 cm length just above the middle and below the middle of the tube could be heated independent from each other at desired temperatures.

The reactor was filled with a mixture of equal parts by weight of granular activated carbon (Chemviron) and Flexicoke (particle size 0.5-2 mm). The net free volumina in the two reactor parts were about 30 cm³.While passing through nitrogen the lowermost bed was heated to 900°C and the uppermost bed to 650°C.

The stream of nitrogen was adjusted to 30 mmole/h and at the bottom after evaporation at 200°C, 1.2 g/h (66.7 mmole/h of water was introduced. It was established that this was quantitatively converted into H₂ and further CO and a few percents of CO₂ and methane. Subsequently half-way a mixture of chlorobenzene (23 mmole/h) and CCl₄ (7.75 mmole/h) was supplied, viz. an input of 54 meq of organic chlorine per hour. The effluent mixture, beside residual H₂ with N₂, CO, and CO₂, comprised benzene, methane and some biphenyl, small amounts of C₂'s and traces of toluene. Organic chlorine compounds (chlorobenzene, methylchloride) could not be established. After 1 h at the bottom 2.5 g of spent carbon bed was removed and a corresponding amount of fresh carbon mixture was supplied at the top; this removal of 2.5 g of spent carbon bed and supplying of a corresponding amount of fresh carbon mixture was repeated every 15 min. for a total period of 12 h. For the whole duration of the run the previously mentioned specifications regarding the dechlorination were maintained. After interruption for one night continuation in the same way was again possible.

### Example XIV

A quartz tube as used in Example I, was filled with 18 g Chemviron carbon, (thereafter the effective volume was 14 ml) and heated to 750°C in a stream of hydrogen (50 mmole/h). After 15 minutes a stream of 67 mmole/h of benzene, containing 2% by weight of parachlorofluorobenzene was also added. The contact time was 5.3 seconds. For 3 h, the duration of this experiment, the conversion of C₆H₄Cl F was>99.99%. The effluent organic product (substantially benzene) only contained traces of fluorobenzene (GCMS analysis).

### Example XV

Example XIV was followed, except that H₂ (100 mmole/h), and a mixture of chlorobenzene (14.7 mmole/h) and bromobenzene (15.8 mmole/h) were applied. T = 625°C, τ = 5.8 sec. For 3 h the conversion of the two substrates was > 99.99%. The yield of benzene was about 50% overall, the yield of HCl and HBr (determined by titration) was practically quantitative. In accordance herewith the following observation was made: After the supply of halobenzenes was stopped, the reactor was heated to 850°C, the passing of H₂ was continued. It was established that only minimal traces of HCl/HBr were eluated.

## Claims

1. A process for the destruction of chemical waste materials comprising halogen compounds by hydrogenolysis, wherein a stream of the waste materials together with hydrogen is passed through a catalyst bed at elevated temperature, **characterized in that** the waste materials are passed through a bed of carbon particles at a temperature of between 400°and 650°C.

2. Process according to claim 1, characterized in that the bed of carbon particles at least partially consists of activated carbon.

3. Process according to claim 2, characterized in that the bed of carbon particles for at least 10% consists of activated carbon.

4. Process according to claim 1, characterized in that the bed consists of carbon particles to which compounds of metals from Group 6A and/or compounds of metals from Group 7A or 8 of the Periodical System have been added.

5. Process according to claim 4, characterized in that to the bed compounds of iron, nickel, and/or cobalt and/or compounds of tungsten and/or of molybdenum have been added.

6. Process according to one of the preceding claims, characterized in that the carbon particles have a minimum size of 0.2-5 mm.

7. Process according to claim 6, characterized in that the carbon particles are granular and have a diameter of 0.2-5 mm, in particular a diameter of 0.5-2 mm.

8. Process according to claim 6,characterized in that the carbon particles are bars having a diameter of from 0.2-5 mm, preferably 0.5-3 mm and a length of 2-5 mm.

9. Process according to one of the preceding claims, characterized in that the bed of carbon particles is regularly changed.

10. Process according to claim 9, characterized in that after 3 to 8 hours use the bed of carbon particles is changed.

11. Process according to claim 10, characterized in that regularly fresh carbon particles are supplied to the reactor and spent carbon particles are removed after a residence period of 3-8 hours.

12. Process according to one of the preceding claims 1-10, characterized in that a stationary bed of carbon particles is used that from time to time is replaced by a fresh bed.

13. Process according to claim 11, characterized in that a 'moving bed' of carbon particles is used.

14. Process according to claim 11, characterized in that a 'fluidized bed' of carbon particles is used.

15. Process according to one of the preceding claims, characterized in that per part by weight of carbon particles 0.5-25 parts by weight of waste materials are decomposed.

16. Process according to one of the preceding claims, characterized in that the amount of hydrogen that is used, is 0.5-5 mole per equivalent of halogen radicals, and optionally sulphur- and/or nitrogen radicals.

## Patentansprüche

1. Verfahren zur Vernichtung chemischer Abfallmaterialien, die Halogenverbindungen enthalten, durch Hydrogenolyse, wobei ein Strom der Abfallmaterialien zusammen mit Wasserstoff bei erhöhter Temperatur durch ein Katalysatorbett geleitet wird, **dadurch gekennzeichnet,** daß die Abfallmaterialien bei einer Temperatur zwischen 400 und 650°C durch ein Bett aus Kohlenstoffteilchen geleitet werden.

2. Verfahren nach Anspruch 1, **dadurch gekennzeichnet,** daß das Bett aus Kohlenstoffteilchen mindestens teilweise aus Aktivkohle besteht.

3. Verfahren nach Anspruch 2, **dadurch gekennzeichnet,** daß das Bett aus Kohlenstoffteilchen mindestens zu 10% aus Aktivkohle besteht.

4. Verfahren nach Anspruch 1, **dadurch gekennzeichnet,** daß das Bett aus Kohlenstoffteilchen besteht, welchen Verbindungen von Metallen aus Gruppe 6A und/oder Verbindungen von Metallen aus Gruppe 7A oder 8 des Periodensystems zugesetzt sind.

5. Verfahren nach Anspruch 4, **dadurch gekennzeichnet,** daß dem Bett Verbindungen von Eisen, Nickel und/oder Kobalt und/oder Verbindungen von Wolfram und/oder Molybdän zugesetzt worden sind.

6. Verfahren nach einem der vorangehenden Ansprüche, **dadurch gekennzeichnet,** daß die Kohlenstoffteilchen eine Mindestgröße von 0,2-5 mm haben.

7. Verfahren nach Anspruch 6, **dadurch gekennzeichnet,** daß die Kohlenstoffteilchen granuliert sind und einen Durchmesser von 0,2-5 mm, insbesondere einen Durchmesser von 0,5-2 mm haben.

8. Verfahren nach Anspruch 6, **dadurch gekennzeichnet,** daß die Kohlenstoffteilchen Stäbe mit einem Durchmesser von 0,2-5 mm, vorzugsweise 0,5-3 mm, und einer Länge von 2-5 mm sind.

9. Verfahren nach einem der vorangehenden Ansprüche, **dadurch gekennzeichnet,** daß das Bett aus Kohlenstoffteilchen regelmäßig gewechselt wird.

10. Verfahren nach Anspruch 9, **dadurch gekennzeichnet,** daß das Bett nach einem 3- bis 8-stündigem Gebrauch gewechselt wird.

11. Verfahren nach Anspruch 10, **dadurch gekennzeichnet,** daß dem Reaktor regelmäßig frische Kohlenstoffteilchen zugeführt werden und verbrauchte Kohlenstoffteilchen nach einer Verweilzeit von 3-8 Stunden entfernt werden.

12. Verfahren nach einem der vorangehenden Ansprüche 1 bis 10, **dadurch gekennzeichnet,** daß ein stationäres Bett aus Kohlenstoffteilchen verwendet und von Zeit zu Zeit durch ein frisches Bett ersetzt wird.

13. Verfahren nach Anspruch 11, **dadurch gekennzeichnet,** daß ein Bewegtbett aus Kohlenstoffteilchen verwendet wird.

14. Verfahren nach Anspruch 11, **dadurch gekennzeichnet,** daß ein Fließbett aus Kohlenstoffteilchen verwendet wird.

15. Verfahren nach einem der vorangehenden Ansprüche, **dadurch gekennzeichnet,** daß pro Gewichtsteil Kohlenstoffteilchen 0,5-25 Gewichtsteile Abfallmaterialien vernichtet werden.

16. Verfahren nach einem der vorangehenden Ansprüche, **dadurch gekennzeichnet,** daß die verwendete Wasserstoffmenge 0,5-5 Mol pro Äquivalent Halogenreste, und wahlweise Schwefel und/oder Stickstoffreste beträgt.

## Revendications

1. Procédé pour détruire par hydrogénolyse les déchets chimiques comprenant des composés halogénés, dans lequel on fait passer à travers un lit de catalyseur à température élevée un courant des déchets en même temps que d'hydrogène, caractérisé en ce que les déchets traversent un lit de particules de carbone à une température de 400 à 650°C.

2. Procédé selon la revendication 1, caractérisé en ce que le lit de particules de carbone est au moins partiellement constitué de charbon activé.

3. Procédé selon la revendication 2, caractérisé en ce que le lit de particules de carbone est pour au moins 10 % constitué de charbon activé.

4. Procédé selon la revendication 1, caractérisé en ce que le lit est constitué de particules de carbone auxquelles on a ajouté des composés de métaux du groupe 6A et/ou des composé de métaux des groupes 7A ou 8 du Tableau Périodique.

5. Procédé selon la revendication 4, caractérisé en ce qu'on ajoute au lit des composés du fer, du nickel et/ou du cobalt et/ou des composés du tungstène et/ou du molybdène.

6. Procédé selon l'une des revendications précédentes, caractérisé en ce que les particules de carbone ont une grosseur moyenne de 0,2-5 mm.

7. Procédé selon la revendication 6, caractérisé en ce que les particules de carbone sont granulaires et ont un diamètre de 0,2-5 mm, notamment un diamètre de 0,5-2 mm.

8. Procédé selon la revendication 6, caractérisé en ce que les particules de carbone sont des barres ayant un diamètre de 0,2-5 mm, de préférence de 0,5-3 mm et une longueur de 2-5 mm.

9. Procédé selon l'une des revendications précédentes, caractérisé en ce que le lit de particules de carbone est périodiquement remplacé.

10. Procédé selon la revendication 9, caractérisé en ce que le lit de particules de carbone est remplacé après 3-8 heures d'utilisation.

11. Procédé selon la revendication 10, caractérisé en ce qu'on introduit périodiquement dans le réacteur des particules de carbone fraîches, les particules de carbone usées étant retirées après un temps de séjour de 3-8 heures.

12. Procédé selon l'une des revendications précédentes 1-10, caractérisé en ce qu'on utilise un lit fixe de particules de carbone, qui de temps à autre est remplacé par un lit frais.

13. Procédé selon la revendication 11, caractérisé en ce qu'on utilise un "lit mobile" de particules de carbone.

14. Procédé selon la revendication 11, caractérisé en ce qu'on utilise un "lit fluidisé" de particules de carbone.

15. Procédé selon l'une des revendications précédentes, caractérisé en ce que 0,5-25 parties en poids de déchets sont décomposés par parties en poids des particules de carbone.

16. Procédé selon l'une des revendications précédentes, caractérisé en ce que la quantité d'hydrogène utilisée est de 0,5-5 moles par équivalent de radicaux halogénés, et éventuellement de radicaux sulfurés et/ou azotés.
